(19) Europäisches Patentamt
European Patent Office
Office européen des brevets

(11) **EP 3 056 001 B1**

(12) **FASCICULE DE BREVET EUROPEEN**

(45) Date de publication et mention
de la délivrance du brevet:
**18.08.2021   Bulletin 2021/33**

(51) Int Cl.:
**H04N 19/63** *(2014.01)*    **H04N 19/635** *(2014.01)*
**H04N 19/124** *(2014.01)*    **H04N 19/187** *(2014.01)*

(21) Numéro de dépôt: **14796797.0**

(22) Date de dépôt: **24.09.2014**

(86) Numéro de dépôt international:
**PCT/FR2014/000213**

(87) Numéro de publication internationale:
**WO 2015/052388 (16.04.2015 Gazette 2015/15)**

(54) **PROCEDE DE CODAGE D'UNE MATRICE, NOTAMMENT D'UNE MATRICE REPRESENTATIVE D'UNE IMAGE FIXE OU VIDEO, UTILISANT UNE TRANSFORMEE PAR ONDELETTES AVEC DES NOMBRES DE NIVEAUX D'ONDELETTES VARIANT SELON L'IMAGE, ET DES FACTEURS DE QUANTIFICATION DIFFÉRENTS POUR CHAQUE NIVEAU D'ONDELETTE**

VERFAHREN ZUR KODIERUNG EINER MATRIX, INSBESONDERE EINER MATRIX ZUR DARSTELLUNG EINES STANDBILDES ODER EINES VIDEOBILDES, DAS EINE WAVELETTRANSFORMATION MIT EINER VOM BILD ABHÄNGIGEN VARIABLEN ZAHL VON WAVELETSTUFEN UND MIT UNTERSCHIEDLICHEN QUANTISIERUNGSFAKTOREN FÜR JEDE WAVELETSTUFE VERWENDET

METHOD FOR CODING A MATRIX, IN PARTICULAR A MATRIX REPRESENTATIVE OF A STILL IMAGE OR OF A VIDEO IMAGE, USING A WAVELET TRANSFORM WITH A NUMBER OF WAVELET LEVELS VARYING ACCORDING TO THE IMAGE, AND WITH DIFFERENT QUANTIZATION FACTORS FOR EACH WAVELET LEVEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2013   FR 1359861**

(43) Date de publication de la demande:
**17.08.2016   Bulletin 2016/33**

(73) Titulaire: **Colin, Jean-Claude**
**78000 Versailles (FR)**

(72) Inventeurs:
• **GERVAIS, Than Merc-Eric**
  **F-75015 (FR)**
• **LOUBET, Bruno**
  **F-75009 Paris (FR)**
• **BESSOU, Nicolas**
  **F-78500 Sartrouville (FR)**
• **GUIMIOT, Yves**
  **F-64100 Bayonne (FR)**
• **PETITFILS, Mickael**
  **F-93190 Livry - Gargan (FR)**

• **ROQUES, Sébastien**
  **F-75013 Paris (FR)**

(56) Documents cités:
**EP-A2- 0 797 358**

• **SAKJI SARRA ET AL: "Indexing of multichannel images in the wavelet transform domain", INFORMATION AND COMMUNICATION TECHNOLOGIES: FROM THEORY TO APPLICATIONS, 2008. ICTTA 2008. 3RD INTERNATIONAL CONFERENCE ON, IEEE, PISCATAWAY, NJ, USA, 7 avril 2008 (2008-04-07), pages 1-6, XP031258142, ISBN: 978-1-4244-1751-3**
• **MIHAELA VAN DER SCHAAR, PHILIP CHOU AND ALL: "Multimedia over IP and Wireless Networks", REFEREX, 31 mars 2007 (2007-03-31), pages 135-152, XP040425641, ISBN: 9780120884803**

- AMAR AGGOUN: "Compression of 3D Integral Images Using 3D Wavelet Transform", JOURNAL OF DISPLAY TECHNOLOGY, IEEE SERVICE CENTER, NEW YORK, NY, US, vol. 7, no. 11, 1 novembre 2011 (2011-11-01), pages 586-592, XP011383430, ISSN: 1551-319X, DOI: 10.1109/JDT.2011.2159359
- DAVID S TAUBMAN ET AL: "JPEG2000: Standard for Interactive Imaging", PROCEEDINGS OF THE IEEE, IEEE. NEW YORK, US, vol. 90, no. 8, 1 août 2002 (2002-08-01), XP011065053, ISSN: 0018-9219
- JENS-UWE GARBAS ET AL: "Methods and Tools for Wavelet-Based Scalable Multiview Video Coding", IEEE TRANSACTIONS ON CIRCUITS AND SYSTEMS FOR VIDEO TECHNOLOGY, IEEE SERVICE CENTER, PISCATAWAY, NJ, US, vol. 21, no. 2, 1 février 2011 (2011-02-01), pages 113-126, XP011348871, ISSN: 1051-8215, DOI: 10.1109/TCSVT.2011.2105552
- DEBONO CARL J ET AL: "Efficient implementation of the integer lifting transform for video compression on FPGA", PROCEEDINGS ELMAR-2013, CROATIAN SOCIETY ELECTRONICS IN MARINE - ELMAR, 25 septembre 2013 (2013-09-25), pages 71-74, XP032524474, ISSN: 1334-2630 ISBN: 978-953-7044-14-5 [extrait le 2013-11-07]
- NING XU ET AL: "A wireless sensor network For structural monitoring", PROCEEDINGS OF THE 2ND INTERNATIONAL CONFERENCE ON EMBEDDED NETWORKED SENSOR SYSTEMS , SENSYS '04, 1 janvier 2004 (2004-01-01), page 13, XP055008158, New York, New York, USA DOI: 10.1145/1031495.1031498 ISBN: 978-1-58-113879-5
- MORTEZA GHOLIPOUR, HOSSEIN AHMADI NOUBARI, MAHMOUD KAMAREI: "A DSP implementation of lifting based DWT for image processing applications", SPIE, PO BOX 10 BELLINGHAM WA 98227-0010, USA, vol. 8285, no. 828545-1, 31 décembre 2011 (2011-12-31), XP040565157,
- TAN K C B ET AL: "An embedded extension algorithm for the lifting based Discrete Wavelet Transform in JPEG2000", 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002; [IEEE INTERNATIONAL CONFERENCE ON ACOUSTICS, SPEECH, AND SIGNAL PROCESSING (ICASSP)], NEW YORK, NY : IEEE, US, 13 mai 2002 (2002-05-13), pages IV-3513, XP032015597, DOI: 10.1109/ICASSP.2002.5745412 ISBN: 978-0-7803-7402-7

**Description**

La présente invention se rapporte au domaine du codage de valeurs numériques disposées en matrice, notamment dans le cas où cette matrice est une matrice à deux dimensions, représentant les pixels d'une image.

Les contraintes principales des procédés de compression sont, d'une part, de réduire le plus possible, en le comprimant, le volume, mesuré en octets, d'un fichier numérique initial et, d'autre part, de restituer un fichier le plus proche possible du fichier initial. De nombreux procédés de compression image utilisent des transformées par ondelettes, en particulier celui connu sous le nom de Jpeg2000. Chaque niveau d'ondelettes, appliqué horizontalement, divise la largeur par un facteur deux; appliqué verticalement, divise la hauteur par un facteur deux ; appliqué en deux dimensions, il divise les deux dimensions de l'image par un facteur 2. Les codecs existants compressent les images par ondelettes jusqu'à ce que l'image résiduelle ne représente qu'un pixel. Pour réduire le nombre de niveaux d'ondelettes à appliquer, certains de ces codecs, tel le Jpeg2000, divisent l'image en sous-parties rectangulaires, appelées « dalles » (« tiles », en anglais). Cette technique permet de réduire le nombre de niveaux en considérant chacune des sous-parties d'image comme une image entière ; Elle a cependant pour défaut de produire des artéfacts / discontinuités à la limite des dalles, sur l'image restituée après décompression.

Le document Sarra, S., & Amel, B. (2008, April). Indexing of multichannel images in the wavelet transform domain. In 2008 3rd International Conférence on Information and Communication Technologies: From Theory to Applications (pp. 1-6). IEEE. divulgue une méthode d'extraction de caractéristiques d'une image encodées en ondelettes.

Le document Garbas, J. U., Pesquet-Popescu, B., & Kaup, A. (2011). Methods and tools for wavelet-based scalable multiview video coding. IEEE Transactions on Circuits and Systems for Video Technology, 21(2), 113-126. divulgue un codage DPCM s'appliquant à toutes les matrices d'un niveau d'ondelettes, selon un sens de parcours prédéfini.

L'invention a pour but de proposer un procédé de compression simple qui permette, notamment lorsqu'il est appliqué à une matrice représentant une image, de cumuler les avantages de la division de cette image en dalles, sans avoir l'inconvénient de produire sur l'image restituée les discontinuités liées à la transformation, c'est-à-dire à la compression puis la décompression, de ces dalles.

A cet effet, l'invention a pour objet un procédé de compression d'une image numérique comprenant une étape de codage par couches successives d'une matrice initiale en une matrice compressée et sa restitution en une matrice restituée, chaque cellule de la matrice initiale contenant une valeur numérique initiale respective ; chaque cellule de la matrice compressée contenant une valeur numérique compressée respective correspondant à la valeur numérique initiale respective; chaque cellule de la matrice restituée contenant une valeur numérique restituée respective correspondant à la valeur numérique initiale respective ; caractérisé en ce que pour encoder, c'est-à-dire compresser la matrice initiale, on applique : des transformations par ondelettes appliquées à l'ensemble de la matrice sur un nombre limité de niveaux, de sorte qu'il reste un niveau résiduel de dimensions supérieures ou égales à 2x2 ; puis, un codage différentiel de la matrice LL du niveau résiduel à l'aide d'un facteur de quantification $q \geq 1$, comprenant, pour une cellule du niveau résiduel ayant une valeur initiale respective $y_{m,n}$ avec, m le numéro de la ligne au sein de la matrice LL du niveau résiduel, et n le numéro de la colonne au sein de la matrice LL du niveau résiduel, le calcul de la valeur compressée respective correspondante $yQ_{m,n}$ à partir d'une différence entre ladite valeur initiale respective $y_{m,n}$ de la cellule et la valeur restituée respective $yR_{1,n-1}$ , $yR_{m-1,n}$ d'une cellule adjacente du niveau résiduel, ledit codage différentiel du niveau résiduel étant réalisé en : conservant la première valeur : $y_{Q1,1} = yR_{1,1} = y_{1,1}$ ; calculant itérativement les valeurs compressées et restituées de la première ligne, et des colonnes autres que la première (n > 1 ; m = 1) : $y Q_{1,n} = (y_{1,n} - yR_{1,n-1}) /q$ ; $y R_{1,n} = yR_{1,n-1} + yQ_{1,n} * q$ ; calculant itérativement les valeurs compressées et restituées de la première colonne, et des lignes autres que la première (n = 1 ; m > 1) : $y Q_{m,1} = (y_{m,1} - yR_{m-1,1}) /q$ ; $y R_{m,1} = yR_{m-1,1} + yQ_{m,1} * q$ ; pour chaque cellule n'appartenant ni à la première ligne ni à la première colonne (m > 1, n > 1) : calculant la différence horizontale la plus proche parmi les valeurs restituées : $D H_{m,n} = |yR_{m-1,n} - yR_{m-1,n-1}|$ ; calculant la différence verticale la plus proche parmi les valeurs restituées : $D V_{m,n} = |yR_{m,n-1} - yR_{m-1,n-1}|$ ; calculant les valeurs compressées et restituées de la cellule à partir d'une valeur restituée adjacente choisie en fonction d'une comparaison entre les différences horizontale et verticale les plus proches : Si DV <= DH : $y Q_{m,n} = (y_{m,n} - yR_{m-1,n}) /q$ ; $y R_{m,n} = yR_{m-1,n} + yQ_{m,n} * q$ ; Si DH < DV : $y Q_{m,n} = (y_{m,n} - yR_{m,n-1}) / q$; $y R_{m,n} = yR_{m,n-1} + yQ_{m,n} * q$.

Plusieurs modes d'exécution de l'invention seront décrits ci-après, à titre d'exemples non limitatifs, en référence aux dessins annexés dans lesquels :

- la figure 1 représente une image brute d'une taille de 320x224 pixels ;
- la figure 2 représente une première image restituée, résultant de la compression puis de la décompression par un procédé par ondelettes de l'art antérieur appliqué globalement à l'ensemble de l'image brute de la figure 1;

- la figure 3 représente une deuxième image restituée, résultant de la compression puis de la décompression à l'aide d'un procédé par ondelettes de l'art antérieur appliqué à l'image brute de la figure 1 préalablement découpée en dalles de 32x32 pixels; et,

- la figure 4 représente une troisième image restituée, résultant de la compression puis de la décompression par un procédé par ondelettes selon l'invention appliqué globalement à l'ensemble de l'image brute de la figure 1.

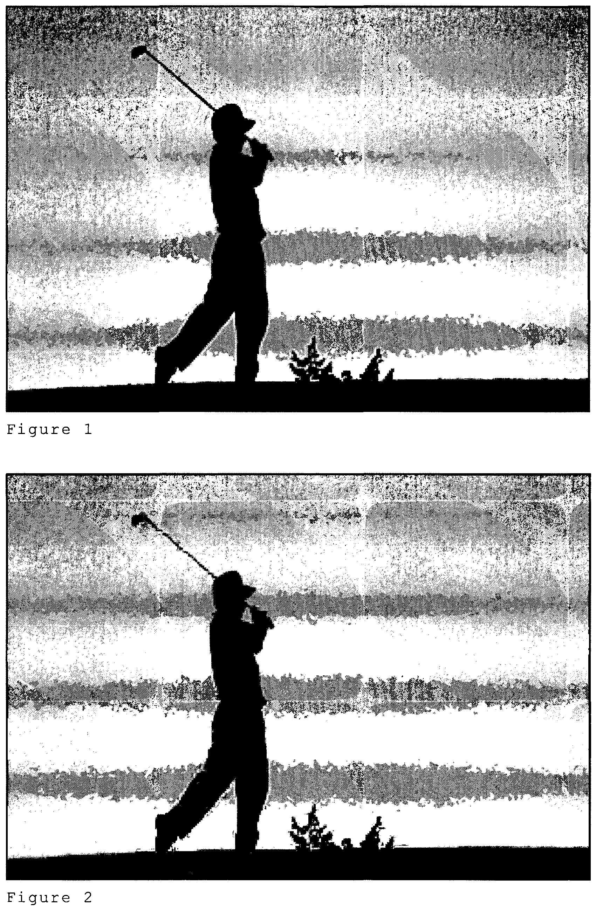

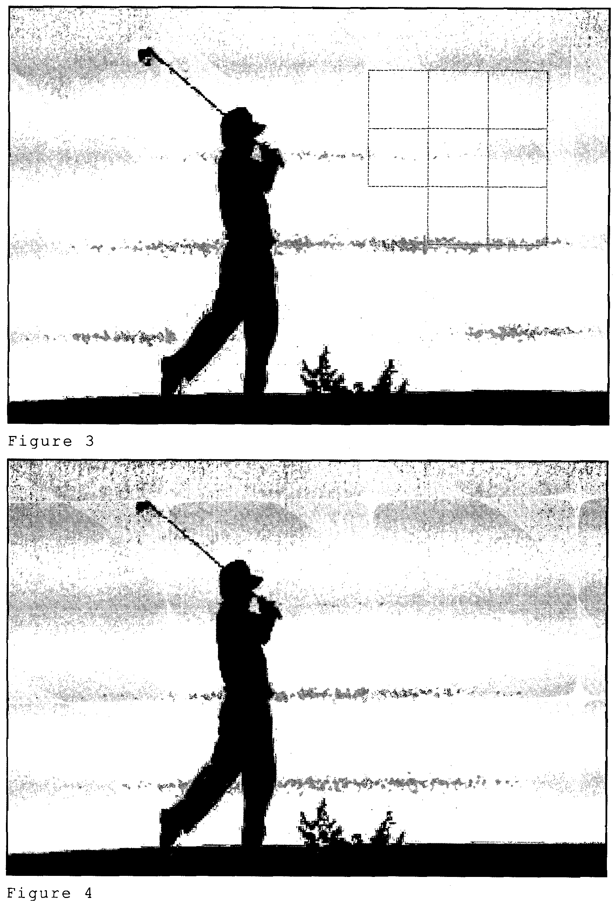

Un procédé selon l'invention va être décrit dans son application à la compression numérique d'une image. Dans cet exemple, on applique une ondelette discrète de type Cohen-Daubechies-Fauveau (CDF) 5/3 en deux dimensions avec procédé d'élévation. L'image d'origine, brute, est représentée à la figure 1. L'image restituée, après compression puis décompression de l'image initiale par ce procédé, est illustrée par la figure 4. Dans l'exemple illustré, l'image est une image en niveaux de gris comprenant 320 colonnes et 224 lignes soit 320x224 pixels.

Selon le procédé on calcule un nombre de niveaux adapté à la compression de l'image. Par nombre de niveaux, on entend la somme du nombre de niveaux traités par ondelettes, et du niveau résiduel traité par différences. Par exemple, une image comprenant quatre niveaux aura trois niveaux traités par ondelettes, et un niveau résiduel traité par différences.

Afin que le niveau résiduel soit suffisamment représentatif du contenu de l'image, on calcule à titre d'exemple le nombre de niveaux de la manière suivante :

- on prend la dimension la plus petite entre hauteur et largeur : par exemple, dans le cas de l'image 320x224, le dimension minimale est la hauteur, soit : min_dim = 224 ;
- on détermine le nombre de niveau Nv_niveaux par application de la formule suivante à la dimension minimale :

$$\text{Nb\_niveaux} = \text{ARRONDI.INF} \left[ \ln(\text{min\_dim}) / \ln(2) - 3 \right]$$

Et,

$$1 \leq \text{Nb\_niveaux} \leq 5$$

dans laquelle :

- ARRONDI.INF représente l'arrondi inférieur. Par exemple :
  ARRONDI.INF(4.99) = 4
- Ln représente le logarithme népérien.

De préférence et dans l'exemple illustré, pour les grandes images, on se limite à 5 niveaux. Ainsi, si :

$$\text{ARRONDI.INF} \left[ \ln(\text{min\_dim}) / \ln(2) - 3 \right] > 5$$

alors, Nb_niveaux = 5.

Pour les très petites images, on a au moins un niveau. Ainsi, si :

$$\text{ARRONDI.INF} \left[ \ln(\text{min\_dim}) / \ln(2) - 3 \right] = 0$$

alors, Nb_niveaux = 1 ;

Dans l'exemple illustré :

- Ln(224) = 5.41
- Ln(2) = 0.69

D' où :

$$\text{Nb\_niveaux} = \text{ARRONDI.INF} \left[ (5.41 / 0.69) - 3 \right] = 4$$

On aura donc quatre niveaux, dont trois niveaux traités par ondelettes, et un niveau résiduel, traité par différences.

Dans la suite du document on considérera le niveau résiduel comme étant le niveau de départ pour le décodage de l'image, c'est-à-dire le niveau traité par des différences, précédemment nommé « niveau résiduel », c'est-à-dire le niveau possédant la résolution la plus petite ; le dernier niveau étant celui contenant l'image complète.

On calcule aussi des facteurs de quantification. Dans l'exemple illustré, on définit un facteur de quantification pour chaque niveau. Si ce facteur est 1, il n'y a pas de quantification et la transformation s'applique sans perte. Lorsqu'un facteur de quantification est appliqué à un niveau d'ondelettes, on quantifie chacune des sous-matrices LH, HL et HH de ce niveau avec ce facteur de quantification. Lorsqu'un facteur de quantification est appliqué au niveau résiduel, on quantifie chacune des valeurs de différences selon ce facteur. Avantageusement, les valeurs des facteurs de quantification sont croissantes à chaque niveau : les derniers niveaux, contenant plus de données, seront plus quantifiés que les premiers.

Ces transformations et quantification peuvent aussi bien s'effectuer en nombres entiers qu'en nombre à virgules fixes, pour tout ou partie des niveaux.

La méthode de calcul des facteurs de quantification peut être la suivante :

- on définit un facteur de quantification maximum Qmax, qui sera appliqué à la matrice HH du dernier niveau ; et,
- on divise ce facteur par 2 pour obtenir le facteur de quantification des matrices LH et HL de ce même dernier niveau ; puis,
- pour chacun des autres niveaux d'ondelettes, on définit le facteur de quantification associé à la matrice HH comme étant celui des matrices LH et HL du niveau suivant, et celui des matrices LH et HL du niveau courant comme étant celui associé à la matrice HH du niveau courant :

Si un facteur calculé est inférieur à 1, il n'y a pas de quantification.

Le niveau résiduel, traité par différences peut être quantifié, ou pas.

Pour simplifier, on utilise dans les exemples un facteur de quantification fixe par niveau d'ondelettes, les facteurs par niveau étant définis plus bas.

Dans la suite de cette description, on utilise les conventions suivantes pour les valeurs et pour les arrondis.

Pour les valeurs, les conventions sont les suivantes : On se place systématiquement dans le cadre de matrices Y dont chaque valeur est représentée par un élément nommé $Y_{m,n}$, où :

- m représente le numéro de la ligne où se trouve l'élément dans la matrice Y ;
- n représente le numéro de la colonne où se trouve l'élément dans la matrice ;

les lignes n et colonnes m étant numérotées en partant de 1, l'élément $y_{1,1}$ étant situé en haut à gauche de la matrice Y. Ainsi, une matrice Y peut être représentée de la façon suivante :

| y11 | y12 | y13 | y14 | y15 | y16 | y17 | y18 | y1n |
|------|------|------|------|------|------|------|------|------|
| y21 | y22 | y23 | y24 | y25 | y26 | y27 | y28 | |
| y31 | y32 | y33 | y34 | y35 | y36 | y37 | y38 | |
| y41 | y42 | y43 | y44 | y45 | y46 | y47 | y48 | |
| y51 | y52 | y53 | y54 | y55 | y56 | y57 | y58 | |
| y61 | y62 | y63 | y64 | y65 | y66 | y67 | y68 | |
| y71 | y72 | y73 | y74 | y75 | y76 | y77 | y78 | |
| y81 ym1 | y82 | y83 | y84 | y85 | y86 | y87 | y88 | ymn |

Pour les arrondis, les conventions sont : Sauf pour le calcul de nombre de niveau, chaque fois qu'un arrondi est nécessaire, il est effectué à la valeur entière la plus proche ; par exemple on obtient les arrondis suivants :

ARRONDI(0,5) = 1
ARRONDI(0,49) = 0
ARRONDI(-0,49) = 0
ARRONDI(-0,5) = -1

Une étape suivante du procédé, consiste à encoder les niveaux prévus en utilisant des ondelettes. Dans l'exemple illustré, on utilise des ondelettes de type CDF 5/3.

Une étape d'ondelettes verticales s'obtient avec les équations suivantes :

- Calcul de la matrice H de détails :

$$h_{m,\,n} = y_{2m,\,n} - [\, y_{2m-1,\,n} + y_{2m+1,\,n}\,]\,/\,2$$

pour tout m compris entre 1 et la moitié de la hauteur de Y, pour tout n sur la largeur de la matrice Y.

- Calcul de la matrice d'approximation L :

$$l_{mn} = y_{2m-1,\,n} + [\, h_{m-1,\,n} + h_{m,\,n}\,]\,/\,4$$

pour m inférieur ou égal à la moitié de la hauteur de Y, + 1 si la hauteur de Y est impaire, pour tout n sur la largeur de Y.

Une étape d'ondelettes horizontale s'obtient avec les équations suivantes :

- Calcul de la matrice de détails :

$$h_{m,\,n} = y_{m,\,2n} - [\, y_{m,\,2n-1} + y_{m,\,2n+1}\,]\,/\,2$$

pour tout n compris entre 1 et la moitié de la largeur de Y, pour tout m sur la hauteur de Y.

- Calcul de la matrice d'approximation :

$$l_{mn} = y_{m,\,2n-1} + [\, h_{m,\,n-1} + h_{m,\,n}\,]\,/\,4$$

pour n inférieur ou égal à la moitié de la largeur de Y, + 1 si la largeur de Y est impaire, pour tout m sur la hauteur de Y.

De manière classique, un niveau d'ondelettes en 2 dimensions est obtenu de la manière suivante :

- On applique une ondelette verticale à une matrice Y en entrée, pour générer une matrice L (approximation) et une matrice H (détails) ;
- On applique une ondelette horizontale à la matrice L pour obtenir une matrice LL (approximation) et une matrice LH (détails)
- On applique une ondelette horizontale à la matrice H pour obtenir deux matrices HL (détails) et HH (détails)

La matrice d'approximation LL sert alors de matrice d'entrée pour le niveau précédent.

On encode ensuite le niveau résiduel, c'est-à-dire le niveau résiduel après avoir encodés les autres niveaux au moyen des ondelettes. On note $y_{m,n}$ les valeurs d'une matrice Y représentant le premier niveau, ou niveau résiduel, selon la convention définie plus haut : on appelle y les valeurs d'origine, $yQ_{m,n}$ les valeurs compressées (quantifiées) et $yR_{m,n}$ les valeurs restituées.

Dans l'exemple illustré, on utilise ici un facteur q = 2. L'encodage du premier niveau ou niveau résiduel se fait en utilisant des différences quantifiées et en adaptant le sens de parcours :

- La première valeur $y_{1,1}$ est conservée, de sorte que :

$$yQ_{1,1} = yR_{1,1} = y_{1,1}\;;$$

- Pour toutes les valeurs $y_{1,n}$ de la première ligne :

$$yQ_{1,n} = (y_{1,n} - yR_{1,n-1})\,/\,q$$

et,

$$yR_{1,n} = yR_{1,n-1} + yQ_{1,n} * q$$

- Pour toutes les valeurs $y_{m,1}$ de la première colonne :

$$yQ_{m,1} = (y_{m,1} - yR_{m-1,1}) / q$$

et,

$$yR_{m,1} = yR_{m-1,1} + yQ_{m,1} * q$$

Pour toutes les valeurs restantes, les barres verticales | | représentant la valeur absolue de ce qu'elles encadrent :

- On calcule la différence horizontale la plus proche parmi les valeurs restituées :

$$DH_{m,n} = |yR_{m-1,n} - yR_{m-1,n-1}|$$

- On calcule la différence verticale la plus proche parmi les valeurs resituées :

$$DV_{m,n} = |yR_{m,n-1} - yR_{m-1,n-1}|$$

- On choisit une valeur de référence en fonction de la différence la plus faible, verticale par défaut:

    o Si DV <= DH : différence verticale

$$yQ_{m,n} = (y_{m,n} - yR_{m-1,n}) / q$$

et,

$$yR_{m,n} = yR_{m-1,n} + yQ_{m,n} * q$$

    o Si DH < DV : différence horizontale :

$$yQ_{m,n} = (y_{m,n} - yR_{m,n-1}) / q$$

et,

$$yR_{m,n} = yR_{m,n-1} + yQ_{m,n} * q$$

- Si le dernier niveau n'est pas quantifié (q = 1), les formules précédentes peuvent être simplifiées avec $yR_{m,n} = y_{m,n}$.

Lors du décodage du niveau résiduel, on calcule les sens de parcours de manière identique à l'encodage, les valeurs restituées étant les mêmes. On effectue donc les opérations suivantes pour obtenir les valeurs restituées:

• La première valeur $y_{1,1}$ est conservée telle quelle :

$$yR_{11} = yQ_{11}$$

- Pour toutes les valeurs $y_{1,n}$ de la première ligne :
  - ○

$$yR_{1,n} = yR_{1,n-1} + yQ_{1,n} * q$$

- Pour toutes les valeurs $y_{m,1}$ de la première colonne :
  - ○

$$yR_{m,1} = yR_{m-1,1} + yQ_{m,1} * q$$

- Pour toutes les valeurs restantes :

  ○ On calcule la différence horizontale la plus proche parmi les valeurs restituées :
  - ■

$$DH_{m,n} = \left| yR_{m-1,n} - yR_{m-1,n-1} \right|$$

  ○ On calcule la différence verticale la plus proche parmi les valeurs resituées :
  - ■

$$DV_{m,n} = \left| yR_{m,n-1} - yR_{m-1,n-1} \right|$$

  ○ On choisit une valeur de référence en fonction de la différence la plus faible, verticale par défaut:
  ○ Si DV <= DH, différence verticale
  - ■

$$yR_{m,n} = yR_{m-1,n} + yQ_{m,n} * q$$

  ○ Si DH < DV différence horizontale :
  - ■

$$yR_{m,n} = yR_{m,n-1} + yQ_{m,n} * q$$

Si le niveau résiduel n'est pas quantifié (q = 1), les formules précédentes peuvent être simplifiées avec $yR_{m,n} = y_{m,n}$.

On décode ensuite les niveaux précédemment encodés par ondelettes. Pour le décodage de chaque niveau d'ondelettes, on dé-quantifie les sous-matrices LH, HL et HH quantifiées, puis on effectue une ondelette inverse en deux dimensions on utilisant ces matrices dé-quantifiées et la matrice LL restituée par le décodage du niveau précédent.

Dans l'exemple, on se place dans le cadre de la compression d'une image en niveaux de gris utilisant une ondelette de type CDF 5/3 en deux dimensions.

On encodera une image sur 8 bits (valeurs de 0 à 255) d'une dimension de 320x224, illustrée à la figure 1, de trois manières :

- selon un premier procédé de l'état de l'art : encodage par niveaux d'ondelettes successifs sur l'ensemble de l'image jusqu'à ce que l'image fasse 1 pixel et restituant une image telle qu'illustrée à la figure 2 ;
- selon un deuxième procédé de l'état de l'art : séparation en dalles de 32x32, application de 5 niveaux d'ondelettes, pour atteindre une taille de 1 pixel pour l'ultime niveau et restituant une image telle qu'illustrée à la figure 3 ;
- selon un procédé selon l'invention : application de 3 niveaux successifs sur l'ensemble de l'image, puis encodage des différences et restituant une image telle qu'illustrée à la figure 4.

On quantifiera les niveaux successifs selon les mêmes facteurs dans chacun des cas, par ordre de niveau décroissants : 50, 25, 15, 2, 2, 1, 1, 1, 1.

Ici, on ne travaille que sur des nombre entiers, et, pour chaque niveau de transformation par ondelettes, on applique un facteur unique aux matrices LH, HL, et HH de ce niveau.

Selon le premier état de l'art :

Il faut, à partir d'une image 320x224, 10 niveaux d'ondelettes successifs sur l'ensemble de l'image pour atteindre une image de 1 pixel.

Les résolutions et facteurs de quantification des niveaux successifs sont :

| Niveau | Hauteur | Largeur | Quantification |
|--------|---------|---------|----------------|
| 1 | 1 | 1 | 1 |
| 2 | .1 | 2 | 1 |
| 3 | 2 | 3 | 1 |
| 4 | 4 | 5 | 1 |
| 5 | 7 | 10 | 1 |
| 6 | 14 | 20 | 2 |
| 7 | 28 | 40 | 3 |
| 8 | 56 | 80 | 25 |
| 9 | 112 | 460 | 30 |
| 10 | 224 | 320 | 60 |

On applique à chaque niveau une transformée par ondelette discrète en deux dimensions de type CDF 5/3 avec procédé d'élévation. Les matrices LH, HL, HH de chaque niveau sont quantifiées par le facteur associées et arrondies à la valeur entière supérieure :

```
ARRONDI(0.5) = 1
ARRONDI(0.49) = 0
ARRONDI(-0.49) = 0
ARRONDI(-0.5) =-1
```

On calcule ensuite le poids théorique de l'image de la manière suivante : on forme un signal contenant tous les coefficients d'ondelettes quantifiés, et on leur applique la formule de l'entropie de Shannon.

Enfin, on calcule l'erreur moyenne de la manière suivante : on effectue la valeur absolue de la différence entre chaque valeur d'origine et chaque valeur restituée équivalente, on prend la moyenne des valeurs.

On obtient les résultats suivants, illustrés par la figure 2 :

- Poids théorique : 2.0006 kB
- Différence moyenne : 0.8335

Selon le premier état de l'art :

On sépare l'image en dalles de 32x32 pixels. On a donc 320 / 32 = 10 dalles horizontalement, et 224 / 32 = 7 dalles verticalement, soit 10 * 7 = 70 dalles en tout.

Chacune de ces dalles est compressée avec 5 niveaux d'ondelettes successifs, jusqu'à aboutir à une dalle de 1 pixel, puis quantifié avec les même facteurs que précédemment. Pour chaque dalle, on obtient :

| Niveau | Hauteur | Largeur | Quantification |
|--------|---------|---------|----------------|
| 1 | 1 | 1 | 1 |
| 2 | 2 | 2 | 2 |
| 3 | 4 | 4 | 3 |
| 4 | 8 | 8 | 25 |

(suite)

| Niveau | Hauteur | Largeur | Quantification |
|--------|---------|---------|----------------|
| 5 | 16 | 16 | 30 |
| 6 | 32 | 32 | 60 |

On applique à chaque niveau une transformée par ondelette discrète en deux dimensions de type CDF 5/3 avec procédé d'élévation. Les matrices LH, HL, HH de chaque niveau sont quantifiées par le facteur associées et arrondies à la valeur entière supérieure :

ARRONDI(0.5) = 1
ARRONDI(0.49) = 0
ARRONDI(-0.49) = 0
ARRONDI(-0.5) = -1

On calcule ensuite le poids théorique de l'image de la manière suivante : on forme un signal contenant tous les coefficients d'ondelettes quantifiés, et on leur applique la formule de l'entropie de Shannon.

Enfin, on calcule l'erreur moyenne de la manière suivante : on effectue la valeur absolue de la différence entre chaque valeur d'origine et chaque valeur restituée équivalente, on prend la moyenne des valeurs.

On obtient les résultats suivants, illustrés par la figure 3 :

- Poids théorique : 2.1775 kB
- Différence moyenne : 1.2197

On note en outre que les limites des dalles sont marquées sur l'image restituées. Ces limites ont été partiellement soulignées par un tracé ajouté à la figure 3, pour mieux illustrer le propos.

Selon le procédé selon l'invention :

On calcule le nombre de niveaux nécessaires : dans notre cas la plus petite dimension est la hauteur, soit une valeur égale à 224.

On doit donc avoir : nb_niveaux = ARRONDI.INF(ln(224) / ln(2)-3) = ARRONDI.INF((5.41 / 0.69) - 3) = ARRONDI.INF(4.8) = 4

On obtient donc 3 niveaux d'ondelettes (niveaux 2,3,4) appliqués sur l'ensemble de l'image, et un niveau résiduel encodé par des différences. Les dimensions et facteurs de quantification des niveaux sont les suivantes

| Niveau | Hauteur | Largeur | Quantification |
|--------|---------|---------|----------------|
| 1 | 28 | 40 | 3 |
| 2 | 56 | 80 | 25 |
| 3 | 112 | 160 | 30 |
| 4 | 224 | 320 | 60 |

On applique à chaque niveau une transformée par ondelette discrète en deux dimensions de type CDF 5/3 avec procédé d'élévation. Les matrices LH, HL, HH de chaque niveau sont quantifiées par le facteur associées et arrondies à la valeur entière supérieure :

ARRONDI(0.5) = 1
ARRONDI(0.49) = 0
ARRONDI(-0.49) = 0
ARRONDI(-0.5) = -1

Pour le niveau résiduel, on applique les différences tel que défini plus haut, puis on utilise le même arrondi.

On calcule ensuite le poids théorique de l'image de la manière suivante : on forme un signal contenant tous les coefficients d'ondelettes quantifiés, et on leur applique la formule de l'entropie de Shannon.

Enfin, on calcule l'erreur moyenne de la manière suivante : on effectue la valeur absolue de la différence entre chaque valeur d'origine et chaque valeur restituée équivalente, on prend la moyenne des valeurs.

On obtient les résultats suivants, illustrés à la figure 4 :

- Poids théorique : 1.9277 kB
- Différence moyenne : 0.7815

Bien sûr, l'invention n'est pas limitée aux exemples qui viennent d'être décrits.

Ainsi, les ondelettes peuvent être utilisées selon une seule dimension, par exemple uniquement horizontalement, ou uniquement verticalement, au lieu d'être utilisées selon deux dimensions, tel que décrit précédemment. On peut aussi utiliser des ondelettes avec ou sans procédé d'élévation

Encore, une formule différente peut être utilisée pour calculer le nombre de niveaux et/ou le nombre de niveau maximal peut être différent de 5. Le nombre de niveaux peut également être prédéfini. Par exemple, le nombre de niveau peut être 3 ou 4, c'est-à-dire le nombre de niveau traités par ondelettes être 2 ou 3 au lieu de 4.

Aussi, on peut utiliser un seul facteur de quantification par niveau d'ondelettes, ou, à l'opposé, choisir un facteur de quantification spécifique pour chacune des sous-matrices LH, HL, HH de chaque niveau d'ondelettes. On peut également fixer des facteurs de manière arbitraire pour chacun des niveaux, ou même chacune des sous-matrices de chaque niveau d'ondelettes.

Un procédé selon l'invention est particulièrement avantageux. Notamment :

- il est simple d'utilisation, puisque même en ne décompressant que le niveau résiduel, on a un premier aperçu de l'image ;
- il produit un nombre de niveaux réduit, et donc nécessite un nombre réduit de tampons (buffers, en anglais) différents pour des données à traiter ;
- il évite l'apparition de d'artéfact ou de discontinuités qui seraient dus à l'utilisation de dalles (tiles, en anglais) ; et,
- la scalabilité du procédé est obtenue par un décodage partiel de l'image encodée permettant de décompresser une imagé à la résolution voulue en ne se basant que sur le nombre de premiers niveaux décompressés nécessaire pour obtenir cette résolution.

L'entropie de Shannon, utilisée plus haut, définit la « quantité » d'information présente dans un signal, et donne donc une indication précise de la quantité de bits nécessaire pour coder ce signal à l'aide de techniques de codage binaire telles que le codage arithmétique ou le codage de Huffman. Plus les valeurs sont répétitives et réparties régulièrement dans le signal, plus l'entropie de ce signal est faible. La formule générale de calcul de l'entropie de Shannon est la suivante :

$$H(X) = H_2(X) = -\sum_{i=1}^{n} P_i \log_2 P_i.$$

où Pi représente la probabilité d'apparition de chaque symbole.

En outre un procédé selon l'invention n'est pas limité à une matrice à deux dimensions. Un tel procédé est par exemple utilisable avec une matrice à trois dimensions, notamment en vue d'une impression 3D d'une image en trois dimensions.

## Revendications

1. Procédé de compression d'une image numérique comprenant une étape de codage par couches successives d'une matrice initiale en une matrice compressée et sa restitution en une matrice restituée, chaque cellule de la matrice initiale contenant une valeur numérique initiale respective ; chaque cellule de la matrice compressée contenant une valeur numérique compressée respective correspondant à la valeur numérique initiale respective; chaque cellule de la matrice restituée contenant une valeur numérique restituée respective correspondant à la valeur numérique initiale respective ; **caractérisé en ce que** pour encoder, c'est-à-dire compresser la matrice initiale, on applique:

   - des transformations par ondelettes appliquées à l'ensemble de la matrice sur un nombre limité de niveaux, de sorte qu'il reste un niveau résiduel de dimensions supérieures ou égales à 2x2; puis,
   - un codage différentiel de la matrice LL du niveau résiduel à l'aide d'un facteur de quantification $q \geq 1$, comprenant, pour une cellule du niveau résiduel ayant une valeur initiale respective $y_{m,n}$ avec m le numéro de la ligne au sein de la matrice LL du niveau résiduel, et n le numéro de la colonne au sein de la matrice LL du niveau résiduel, le calcul de la valeur compressée respective correspondante $yQ_{m,n}$ à partir d'une différence entre ladite valeur initiale respective $y_{m,n}$ de la cellule et la valeur restituée respective $yR_{1,n-1}$, $yR_{m-1,n}$ d'une cellule adjacente du niveau résiduel, ledit codage différentiel du niveau résiduel étant réalisé en :

○ conservant la première valeur : $yQ_{1,1} = yR_{1,1} = y_{1,1}$;
○ calculant itérativement les valeurs compressées et restituées de la première ligne, et des colonnes autres que la première ($n > 1$ ; $m = 1$) :

▪

$$yQ_{1,n} = (y_{1,n} - yR_{1,n-1}) \,/\, q$$

▪

$$yR_{1,n} = yR_{1,n-1} + yQ_{1,n} * q$$

○ calculant itérativement les valeurs compressées et restituées de la première colonne, et des lignes autres que la première ($n = 1$ ; $m > 1$) :

▪

$$yQ_{m,1} = (y_{m,1} - yR_{m-1,1}) \,/\, q$$

▪

$$yR_{m,1} = yR_{m-1,1} + yQ_{m,1} * q$$

○ pour chaque cellule n'appartenant ni à la première ligne ni à la première colonne ($m > 1$, $n > 1$):

- calculant la différence horizontale la plus proche parmi les valeurs restituées :

$$DH_{m,n} = |yR_{m-1,n} - yR_{m-1,n-1}|$$

- calculant la différence verticale la plus proche parmi les valeurs restituées :

$$DV_{m,n} = |yR_{m,n-1} - yR_{m-1,n-1}|$$

▪ calculant les valeurs compressées et restituées de la cellule à partir d'une valeur restituée adjacente choisie en fonction d'une comparaison entre les différences horizontale et verticale les plus proches :

○ Si DV <= DH :

$$yQ_{m,n} = (y_{m,n} - yR_{m-1,n}) \,/\, q$$

$$yR_{m,n} = yR_{m-1,n} + yQ_{m,n} * q$$

○ Si DH < DV :

$$yQ_{m,n} = (y_{m,n} - yR_{m,n-1}) \,/\, q$$

$$yR_{m,n} = yR_{m,n-1} + yQ_{m,n} * q.$$

2. Procédé de codage selon la revendication 1, **caractérisé en ce que** le nombre de niveaux d'ondelettes dépend de la taille de l'image.

3. Procédé selon la revendication 2, **caractérisé en ce que** le calcul du nombre de niveaux d'ondelettes comprend au moins :

> o Une étape de détermination de la dimension min_dim la plus petite de la matrice ;
> o Une étape de détermination d'un nombre de niveaux total Nb_niveaux comprenant le nombre de niveaux d'ondelettes et le niveau résiduel par la formule : Nb_niveaux = ARRONDLINF [ln(min_dim) / ln(2) - 3], dans laquelle ARRONDI.INF représente la fonction arrondi inférieur et ln la fonction logarithme népérien ;
> ◦ Une étape de seuillage du nombre de niveaux total ;Nb_niveaux, à 1 si Nb_niveaux < 1, et à 5 si Nb_niveaux > 5
> ◦ Une étape de soustraction du dernier niveau, le nombre de niveaux d'ondelettes étant égal au nombre de niveaux total moins 1.

4. Procédé selon l'une des revendications 1 à 3, **caractérisé en ce qu'**au moins une sous-matrice est quantifiée par un facteur de quantification q $\geq$ 1.

5. Procédé selon l'une des revendications 1 à 4, **caractérisé en ce que** les ondelettes sont calculées en nombre entiers.

6. Procédé selon l'une des revendications 1 à 4, **caractérisé en ce que** les ondelettes sont calculées en virgules fixes.

7. Procédé selon l'une des revendications 1 à 6, **caractérisé en ce que** les ondelettes sont du type Cohen-Daubechies-Fauveau 5/3.

**Patentansprüche**

1. Verfahren zum Komprimieren eines digitalen Bildes, einen Schritt zur Codierung durch aufeinanderfolgende Schichten einer Anfangsmatrix in eine komprimierte Matrix und deren Wiedergabe in eine Wiedergabematrix umfassend, wobei jede Zelle der Anfangsmatrix einen jeweiligen digitalen Anfangswert enthält; wobei jede Zelle der komprimierten Matrix einen jeweiligen komprimierten digitalen Wert enthält, der dem jeweiligen digitalen Anfangswert entspricht; wobei jede Zelle der Wiedergabematrix einen jeweiligen digitalen Wiedergabewert enthält, der dem jeweiligen digitalen Anfangswert entspricht; **dadurch gekennzeichnet, dass** zum Codieren, das heißt Komprimieren der Anfangsmatrix Folgendes angewendet wird:

> - Transformationen durch Wavelets, die auf die Gesamtheit der Matrix über eine beschränkte Zahl an Stufen angewandt wird, sodass eine Reststufe mit Abmessungen größer oder gleich 2x2 verbleibt; danach,
> - eine Delta-Codierung der Matrix LL der Reststufe mithilfe eines Quantifizierungsfaktors q $\geq$ 1, die für eine Zelle der Reststufe, die einen jeweiligen Anfangswert $y_{m,n}$ aufweist, mit m als Nummer der Zeile innerhalb der Matrix LL der Reststufe, und n als Nummer der Spalte innerhalb der Matrix LL der Reststufe, die Berechnung des entsprechenden jeweiligen komprimierten Wertes $yQ_{m,n}$ ausgehend von einer Differenz zwischen dem jeweiligen Anfangswert $y_{m,n}$ der Zelle und dem jeweiligen Wiedergabewert $yR_{1,n-1}$, $yR_{m-1,n}$ einer angrenzenden Zelle der Reststufe umfasst, wobei die Delta-Codierung der Reststufe realisiert wird, durch:

> ° Beibehalten des ersten Werts: $yQ_{1,1} = yR_{1,1} = y_{1,1}$;
> ° iteratives Berechnen der komprimierten und wiedergegebenen Werte der ersten Zeile und der anderen Spalten als der ersten (n > 1; m = 1):

> > •

$$yQ_{1,n} = (y_{1,n} - yR_{1,n-1})/q$$

> > •

$$yR_{1,n} = yR_{1,n-1} + yQ_{1,n} * q$$

○ iteratives Berechnen der komprimierten und wiedergegebenen Werte der ersten Spalte, und der anderen Zeilen als der ersten (n = 1; m > 1):

•

$$yQ_{m,1} = (y_{m,1} - yR_{m-1,1})/q$$

•

$$yR_{m,1} = yR_{m-1,1} + yQ_{m,1} * q$$

° für jede Zelle, die weder der ersten Zeile, noch der ersten Spalte angehört (m > 1, n > 1):

- Berechnen der nächstgelegenen horizontalen Differenz unter den wiedergegebenen Werten:

$$DH_{m,n} = \left| yR_{m-1,n} - yR_{m-1,n-1} \right|$$

- Berechnen der nächstgelegenen vertikalen Differenz unter den wiedergegebenen Werten:

$$DV_{m,n} = \left| yR_{m,n-1} - yR_{m-1,n-1} \right|$$

• Berechnen der komprimierten und wiedergegebenen Werte der Zelle ausgehend von einem angrenzenden Wiedergabewert, der in Abhängigkeit von einem Vergleich zwischen den nächstgelegenen horizontalen und vertikalen Differenzen ausgewählt wird:

° wenn DV <= DH:

$$yQ_{m,n} = (y_{m,n} - yR_{m-1,n})/q$$

$yR_{m,n} = yR_{m-1,n} + yQ_{m,n} * q$
wenn DH < DV

$$yQ_{m,n} = (y_{m,n} - yR_{m,n-1})/q$$

$$yR_{m,n} = yR_{m,n-1} + yQ_{m,n} * q.$$

**2.** Verfahren zum Codieren nach Anspruch 1, **dadurch gekennzeichnet, dass** die Anzahl an Wavelet-Stufen von der Größe des Bildes abhängig ist.

**3.** Verfahren nach Anspruch 2, **dadurch gekennzeichnet, dass** die Berechnung der Anzahl an Wavelet-Stufen mindestens Folgendes umfasst:

○ einen Schritt des Bestimmens der kleinsten Abmessung min_Abm der Matrix;
° einen Schritt des Bestimmens einer Gesamtzahl an Stufen Anz_Stufen, die Anzahl an Wavelet-Stufen und die Reststufe umfassend, durch die folgende Formel: Anz_Stufen = RUNDUNG.UNT [ln(min_Abm) / ln(2) - 3], wobei RUNDUNG.UNT die abgerundete Funktion und ln die natürliche Logarithmusfunktion darstellt;
° einen Schritt des Bildens eines Schwellenwerts der Gesamtstufenzahl; Anz_Stufen, auf 1 wenn Anz_Stufen < 1 ist und auf 5 wenn Anz_Stufen > 5 ist
° einen Schritt des Subtrahierens der letzten Stufe, wobei die Anzahl an Wavelet-Stufen gleich der Gesamtstufenzahl minus 1 ist.

4. Verfahren nach einem der Ansprüche 1 bis 3, **dadurch gekennzeichnet, dass** mindestens eine Sub-Matrix durch einen Quantifizierungsfaktor q $\geq$ 1 quantifiziert wird.

5. Verfahren nach einem der Ansprüche 1 bis 4, **dadurch gekennzeichnet, dass** die Wavelets in Ganzzahlen berechnet werden.

6. Verfahren nach einem der Ansprüche 1 bis 4, **dadurch gekennzeichnet, dass** die Wavelets mit Festkommastelle berechnet werden.

7. Verfahren nach einem der Ansprüche 1 bis 6, **dadurch gekennzeichnet, dass** die Wavelets vom Typ Cohen-Daubechies-Fauveau 5/3 sind.

**Claims**

1. A method for compressing a digital image comprising a step of coding by successive layers an initial matrix into a compressed matrix and rendering it into a rendered matrix, each cell of the initial matrix containing a respective initial numeric value; each cell of the compressed matrix containing a respective compressed numeric value corresponding to the respective initial numeric value; each cell of the rendered matrix containing a respective rendered numeric value corresponding to the respective initial numeric value; **characterised in that** in order to encode, that is to say compress the initial matrix, are applied:

   - wavelet transformations applied to the entire matrix over a limited number of levels, so that there remains a residual level with dimensions larger than or equal to 2x2; then,
   - a differential coding of the matrix LL of the residual level using a quantisation factor q$\geq$1, comprising, for a cell of the residual level having a respective initial value $y_{m,n}$ with m the number of the row within the matrix LL of the residual level, and n the number of the column within the matrix LL of the residual level, the calculation of the corresponding respective compressed value $yQ_{m,n}$ from a difference between said respective initial value $y_{m,n}$ of the cell and the respective rendered value $yR_{1,n-1}$, $yR_{m-1,n}$ of an adjacent cell of the residual level, said differential coding of the residual level being carried out by:

     ○ keeping the first value: $yQ_{1,1} = yR_{1,1} = y_{1,1}$;
     ○ iteratively calculating the compressed and rendered values of the first row, and of the columns other than the first one (n>1; m=1):

       ▪

$$yQ_{1,n} = (y_{1,n} - yR_{1,n-1}) / q$$

       ▪

$$yR_{1,n} = yR_{1,n-1} + yQ_{1,n} * q$$

     o iteratively calculating the compressed and rendered values of the first column, and of the rows other than the first one (n=1; m>1):

       ▪

$$yQ_{m,1} = (y_{m,1} - yR_{m-1,1}) / q$$

       ▪

$$yR_{m,1} = yR_{m-1,1} + yQ_{m,1} * q$$

◦ for each cell belonging to neither the first row nor the first column (m>1, n>1):

- calculating the nearest horizontal difference among the rendered values:

$$DH_{m,n} = |yR_{m-1,n} - yR_{m-1,n-1}|$$

- calculating the nearest vertical difference among the rendered values:

$$DV_{m,n} = |yR_{m,n-1} - yR_{m-1,n-1}|$$

▪ calculating the compressed and rendered values of the cell from an adjacent rendered value selected according to a comparison between the nearest horizontal and vertical differences:

◦ If DV <= DH:

$$yQ_{m,n} = (y_{m,n} - yR_{m-1,n}) / q$$

$$yR_{m,n} = yR_{m-1,n} + yQ_{m,n} * q$$

◦ If DH < DV:

$$yQ_{m,n} = (y_{m,n} - yR_{m,n-1}) / q$$

$$yR_{m,n} = yR_{m,n-1} + yQ_{m,n} * q.$$

2. The coding method according to claim 1, **characterised in that** the number of wavelet levels depends on the size of the image.

3. The coding method according to claim 2, **characterised in that** the calculation of the number of wavelet levels comprises at least:

   ◦ A step of determining the smallest dimension min_dim of the matrix;
   ◦ A step of determining a total number of levels No._levels comprising the number of wavelet levels and the residual level by the formula: No._levels = ROUNDDOWN [ln(min_dim) / ln(2) - 3], wherein ROUNDDOWN represents the round-down function and ln the natural logarithm function;
   ◦ A step of thresholding the total number of levels;
   No._levels, to 1 if No._levels < 1, and to 5 if No._levels > 5
   ◦ A step of subtracting from the last level, the number of wavelet levels being equal to the total number of levels less 1.

4. The method according to one of claims 1 to 3, **characterised in that** at least one submatrix is quantised by a quantisation factor q≥1.

5. The method according to one of claims 1 to 4, **characterised in that** the wavelets are calculated in integers.

6. The method according to one of claims 1 to 4, **characterised in that** the wavelets are calculated in fixed-point numbers.

7. The method according to one of claims 1 to 6, **characterised in that** the wavelets are of the Cohen-Daubechies-Feauveau 5/3 type.

Figure 1

Figure 2

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Indexing of multichannel images in the wavelet transform domain. **SARRA, S. ; AMEL, B.** 2008 3rd International Conférence on Information and Communication Technologies: From Theory to Applications. IEEE, Avril 2008, 1-6

- **GARBAS, J. U. ; PESQUET-POPESCU, B. ; KAUP, A.** Methods and tools for wavelet-based scalable multiview video coding. *IEEE Transactions on Circuits and Systems for Video Technology,* 2011, vol. 21 (2), 113-126